## Europäisches Patentamt

## European Patent Office

## Office européen des brevets

(11) Veröffentlichungsnummer: **0 235 383**
**B1**

(12) EUROPÄISCHE PATENTSCHRIFT

(45) Veröffentlichungstag der Patentschrift:
07.02.90

(51) Int. Cl.⁴: **B60R 21/20**

(21) Anmeldenummer: 86117369.8

(22) Anmeldetag: 12.12.86

(54) Aufprallschutzeinrichtung für den Insassen eines Kraftfahrzeuges.

(30) Priorität: 21.02.86 DE 3605623

(43) Veröffentlichungstag der Anmeldung:
09.09.87 Patentblatt 87/37

(45) Bekanntmachung des Hinweises auf die Patenterteilung:
07.02.90 Patentblatt 90/6

(84) Benannte Vertragsstaaten:
DE ES FR GB IT NL SE

(56) Entgegenhaltungen:
DE-A- 2 338 025
DE-A- 3 011 463
US-A- 3 904 222

(73) Patentinhaber: Dr.Ing.h.c. F. Porsche
Aktiengesellschaft, Porschestrasse 42,
D-7000 Stuttgart 40(DE)

(72) Erfinder: Friedrich, Stephan, Hirschstrasse 32,
D-7251 Hemmingen(DE)
Erfinder: Maier, Walter, Schongauerstrasse 4,
D-7531 Tiefenbronn(DE)
Erfinder: Kneip, Rainer, Schillerstrasse 27,
D-7257 Ditzingen 1(DE)
Erfinder: Wierschem, Franz-Rudolf, Dipl.-Ing. FH,
Habichstrasse 8, D-7251 Weissach(DE)

## Beschreibung

Die Erfindung betrifft eine Aufprallschutzeinrichtung für den Insassen eines Kraftfahrzeugs gemäß dem Oberbegriff des Patentanspruchs 1.

Bei einer bekannten Aufprallschutzeinrichtung der eingangs genannten Gattung (DE-A1 30 11 463) ist ein Generatorgehäuse, eine Grundplatte, ein Gaskissen, ein Generator und eine mit einer Reißnaht versehene Abdeckung zu einer funktionsfähigen, vorgefertigten Baueinheit zusammengefaßt, die an Innenwandungen des Fahrzeuges befestigt ist. Hinweise über die konkrete Anordnung dieser Baueinheit im Fahrzeug bzw. über die Art der Befestigung sind dieser Druckschrift nicht zu entnehmen.

Die DE-A1 24 25 659 behandelt eine Aufprallschutzeinrichtung für den Insassen eines Kraftfahrzeuges, die in eine Ausnehmung eines Armaturenbretts eingesetzt ist. Die dem Fahrgastraum zugekehrte Öffnung der Ausnehmung ist durch einen Deckel verschließbar, der sich aus zwei Klappen zusammensetzt, wobei die Klappen am oberen und unteren Rand der Öffnung über waagrecht verlaufende Scharnierachsen schwenkbar mit dem Armaturenbrett verbunden sind. Die beiden Klappe werden durch Kunststoffäden in ihrer Schließlage gehalten, die einerseits an der unteren Klappe und andererseits am Gasgenerator befestigt sind. Der Gasgenerator und der Luftsack sind in ein U-förmig profiliertes Gehäuse eingesetzt, das zum Insassen hin offen ausgebildet ist und mit einem aufrechten Steg an einer Aufbauwand anliegt.

Dieser Aufprallschutzreinrichtung haftet der Nachteil an, daß ihre Montage aufwendig ist, da die einzelnen Bauteile nicht zu einer vorgefertigen Baueinheit zusammengefaßt sind. Das Gehäuse muß mit der Aufbauwand, die beiden Klappen mit dem Armaturenbrett und der Gasgenerator sowie das Gaskissen mit dem Gehäuse verbunden werden, bevor schließlich die Kunststoffäden zur Halterung der Klappen angebracht werden.

Ein weiterer Nachteil dieser Anordnung besteht darin, daß beim Entfalten des Gaskissens eine Klappe nach unten hin verschwenkt wird, wodurch Knieverletzungen des Insassen auftreten können. Darüber hinaus funktioniert diese Aufprallschutzeinrichtung nur dann einwandfrei, wenn die obere Begrenzungswand des Deckels und die Scharnierachse einen geradlinigen Formverlauf aufweisen. Ist jedoch die obere Begrenzungskante des Deckels - in der Draufsicht gesehen - gekrümmt, was bei Armaturentafeln in der Regel der Fall ist, stellt sich ein derartiges Scharnier als unbrauchbar heraus.

Die DE-A 2 338 025 offenbart eine Aufprallschutzeinrichtung für den Insassen eines Kraftfahrzeuges, wobei ein U-förmiges Gehäuse, ein Diffusor und ein Kissen eine vormontierte Baueinheit bilden.

Aufgabe der Erfindung ist es, eine Aufprallschutzeinrichtung zu schaffen, die Verletzungen des Insassen vermeidet, einfach und schnell am Aufbau montiert werden kann und bei gegebenem Formverlauf der oberen Begrenzungskante eine einwandfreie Funktion gewährleistet.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch den Aufnahmerahmen eine schnelle, einfache und toleranzausgleichende Montage der Aufprallschutzeinrichtung erzielt wird. Ferner wird durch die Steckverbindung zwischen der vorgefertigten Baueinheit und dem Aufnahmerahmen die Befestigung der Baueinheit wesentlich erleichtert, da diese nicht mehr von Hand in Lage gehalten werden muß. Durch das Verschwenken des Deckels zur Windeschutzscheibe hin werden Verletzungen des Insassen vermieden. Außerdem wird durch die Gestaltung des Aufnahmerahmens und des Deckels erreicht, daß letzterer unabhängig von der Form seiner oberen Begrenzungskante stets eine einwandfreie Verschwenkbewegung beim Aufblasen des Gaskissens ausübt.

Ein Ausführungsbeispiel der Erfindung ist in der Zeichnung dargestellt und wird im folgenden näher erläutert.

Es zeigt

Fig. 1 eine Ansicht vom Fahrgastraum aus auf ein Armaturenbrett mit einer Aufprallschutzreinrichtung für einen Insassen,

Fig. 2 einen Schnitt nach der Linie II-II der Fig. 1 in größerem Maßstab,

Fig. 3 eine schematische Darstellung der Einzelteile der Baueinheit,

Fig. 4 eine Schrägansicht des Aufnahmerahmens und der Baueinheit,

Fig. 5 eine Ansicht in Pfeilrichtung R der Fig. 2, wobei nur der Aufnahmerahmen und die Baueinheit dargestellt sind,

Fig. 6 einen Schnitt nach der Linie VI-VI der Fig. 5,

Fig. 7 einen Schnitt nach der Linie VII-VII der Fig. 5,

Fig. 8 einen Schnitt nach der Linive VIII-VIII der Fig. 5,

Fig. 9 einen Schnitt nach der Linie IX-IX der Fig. 5,

Fig. 10 eine Ansicht in Pfeilrichtung S der Fig. 9.

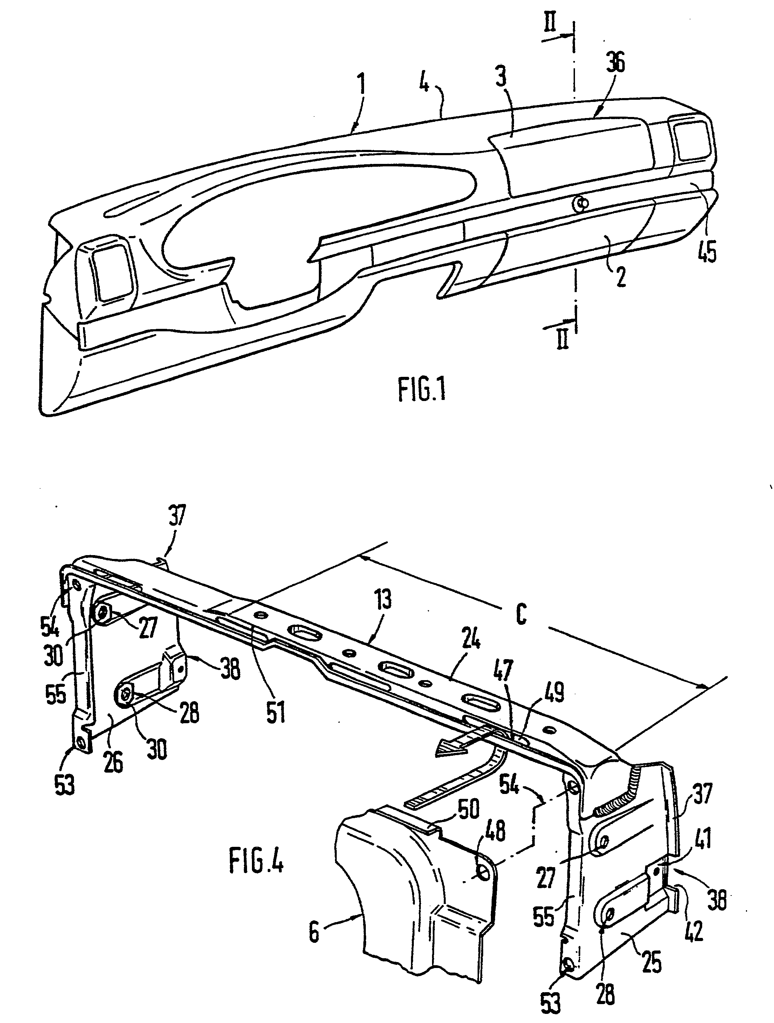

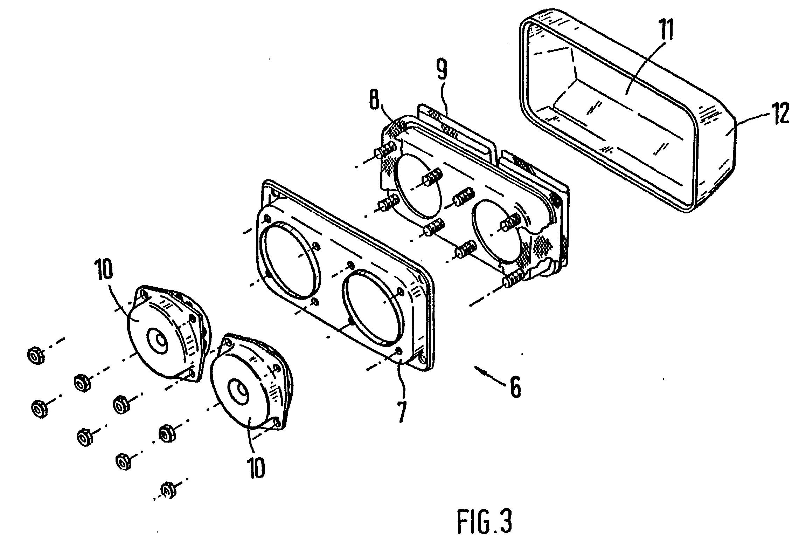

Das in Fig. 1 dargestellte Armaturenbrett 1 weist beifahrerseitig oberhalb eines Handschuhkastens 2 eine mittels eines Deckels 3 verschließbare Ausnehmung 4 auf, in der eine Aufprallschutzeinrichtung 5 (Airbag) für einen Insassen eines Kraftfahrzeugs angeordnet ist. Die Aufprallschutzeinrichtung 5 ist außerhalb des Fahrzeuges zu einer vormontierten funktionsfähigen Baueinheit 6 zusammengesetzt und umfaßt ein Generatorgehäuse 7, eine Grundplatte 8, ein aufblasbares Gaskissen 9, zwei Generatoren 10, eine mit einer Reißnaht 11 versehene Abdeckung 12 sowie nicht näher bezeichnete Befestigungselemente (Fig. 3).

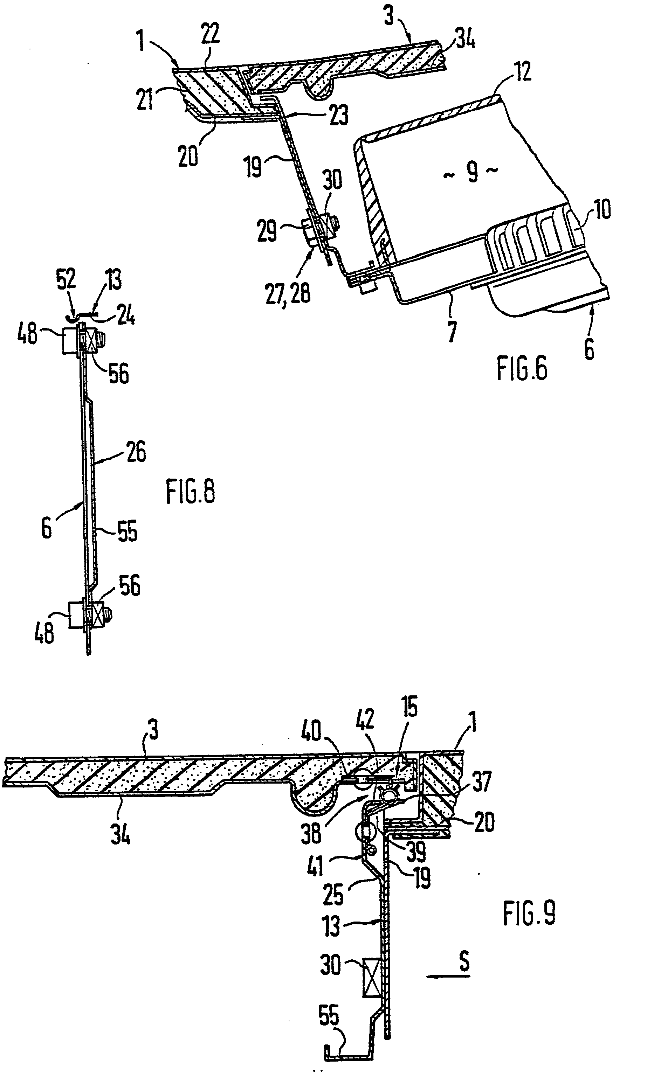

Eine gute Funktion sowie eine schnelle und einfache Montage der Aufprallschutzeinrichtung 5 wird dadurch erzielt, daß die vorgefertigte Baueinheit 6 an einem Aufnahmerahmen 13 befestigt ist, der in die Ausnehmung 4 des Armaturenbretts 1 eingesetzt und an einem die Ausnehmung 4 begrenzenden Trägerteil 14 des Armaturenbretts 1 einstellbar in Lage gehalten ist. Ferner ist der die Ausnehmung 4 verschließende Deckel 3 über eine lösbare Rastverbindung 15 (Fig. 9) und eine weitere Befestigung 16 derart mit dem Aufnahmerahmen 13 verbunden, daß sich beim Entfalten des Gaskissens 9 die Rastverbindung 15 löst und der Deckel 3 von einer Schließstellung A über eine durch den Aufnahmerahmen 13 gebildete Sollbiegestelle 17 nach oben hin zu einer Windschutzscheibe 18 verschwenkt wird (Offenstellung B).

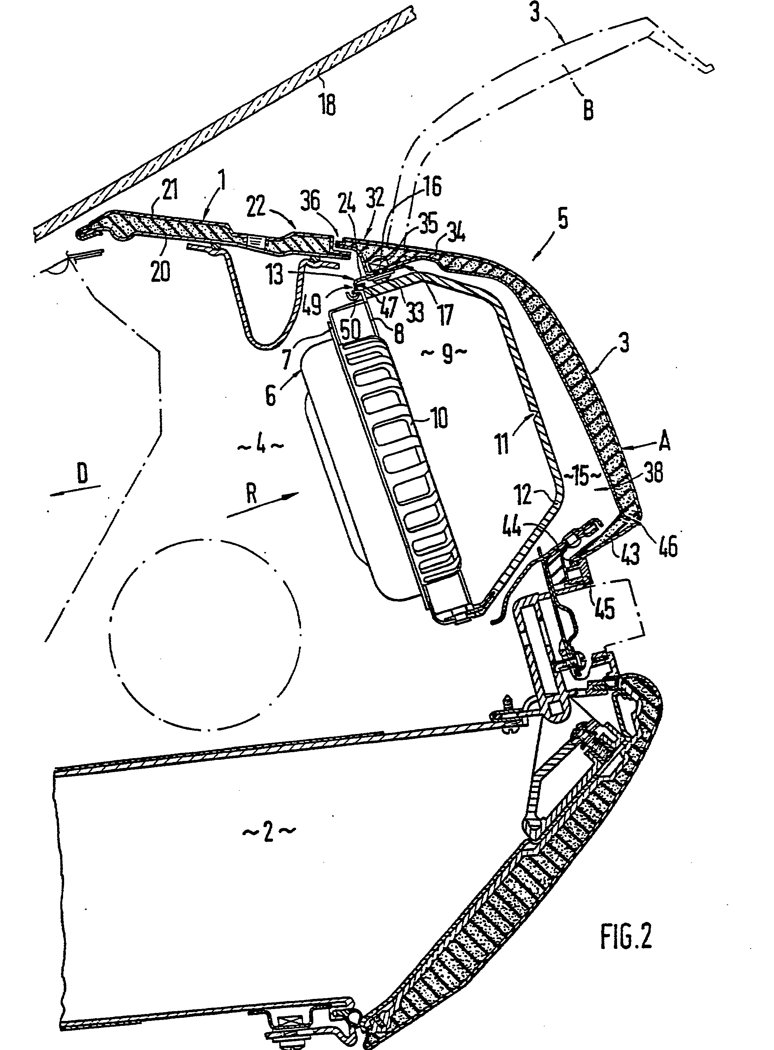

Das Trägerteil 14 umfaßt zwei aufrecht verlaufende, sich in Fahrzeuglängsrichtung erstreckende Stege 19, die mit Abstand zueinander angeordnet und mit einer Versteifungseinlage 20 des Armaturenbretts 1 fest verbunden sind (beispielsweise durch Schweißen). Die Versteifungseinlage 20 erstreckt sich über die gesamte Breite des Armaturenbretts und ist im Querschnitt gesehen in dem Formverlauf des Armaturenbretts angepaßt. Gemäß Fig. 2 ist die aus Aluminium- oder Stahlblech gefertigte Versteifungseinlage 20 auf der dem Insassen abgekehrten Seite des Armaturenbretts 1 angeordnet und wird von einer Schaumlage 21 und einer dekorativen Bezugsschicht 22 abgedeckt (Fig. 2).

Im Bereich der Ausnehmung 4 weist die Versteifungseinlage 20 eine entsprechende Öffnung 23 auf, durch die der Aufnahmerahmen 13 eingeführt wird (Fig. 6).

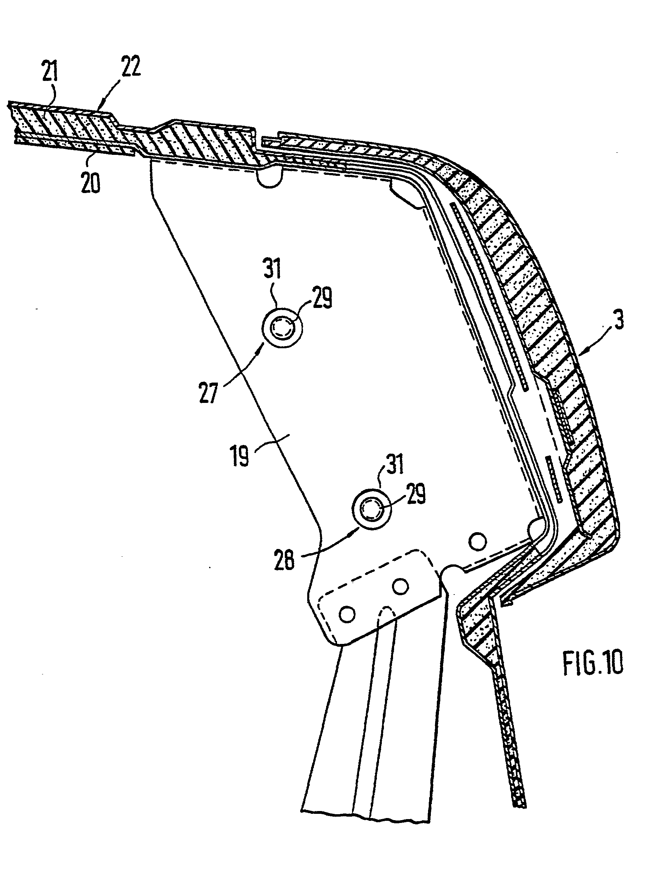

Der aus einem obenliegenden Querteil 24 und zwei aufrecht verlaufenden Seitenteilen 25, 26 gebildete, Aufnahmerahmen 13 wird von der dem Insassen zugekehrten Seite des Armaturenbretts 1 in die Ausnehmung 4 eingeschoben und ist auf jeder Längsseite bei 27 und 28 über Befestigungsschrauben 29 mit einem Steg 19 des Trägerteils 14 verbunden. Die Befestigungsschrauben 29 werden von den Außenseiten der Stege 19 her in Gewindemuttern 30 des Aufnahmerahmens 13 eingedreht, wobei an den Stegen 19 kreisrunde Öffnungen 31 angeordnet sind, die einen größeren Durchmesser aufweisen als der Durchmesser der Befestigungsschraube 29. Dadurch ist eine Einstellbarkeit des Aufnahmerahmens bzw. des mit dem Aufnahmerahmen 13 verbundenen Deckels 3 gegeben (Fig. 10).

Der Deckel 3 ist an seinem oberen, der Windschutzscheibe 18 zugekehrten Endbereich 32 durch Schrauben 33 unmittelbar mit dem Querteil 24 des Aufnahmerahmens 13 verbunden. Ein endseitiger Abschnitt eines Trägerblechs 34 des Deckels 3 liegt zumindest über einen Teilbereich seiner Quererstreckung auf der Oberseite des Querteils 24 auf. Die Schrauben 33 werden von unten her in Gewindemuttern 35 des Deckels 3 eingedreht. Zwischen Deckel 3 und Aufnahmerahmen 13 ist eine Einstellmöglichkeit gegeben.

Da eine obere Begrenzungskante 36 des Deckels 3 bzw. eine korrespondierende Kante des Armaturenbretts 1 in der Draufsicht gesehen stark gekrümmt sind, ist die Verbindung zwischen Aufnahmerahmen 13 und Deckel nur in einem Teilbereich C der Breite des Deckels 3 vorgesehen.

Beim Aufblasen des Gaskissens 9 der Baueinheit 6 bildet die in Fahrtrichtung D gesehen hintenliegende Begrenzungskante des Querteils 24 die Sollbiegestelle 17 für den Deckel 3, der um diese zur Windschutzscheibe 18 hin in eine strichpunktiert dargestellte Offenstellung B verschwenkt wird. Benachbart der Sollbiegestelle 17 ist das vorzugsweise aus dünnwandigem Aluminiumblech gefertigte Trägerblech 34 des Deckels 3 biegeweich ausgebildet, d. h., in dieser Zone sind keine Versteifungssicken angeordnet.

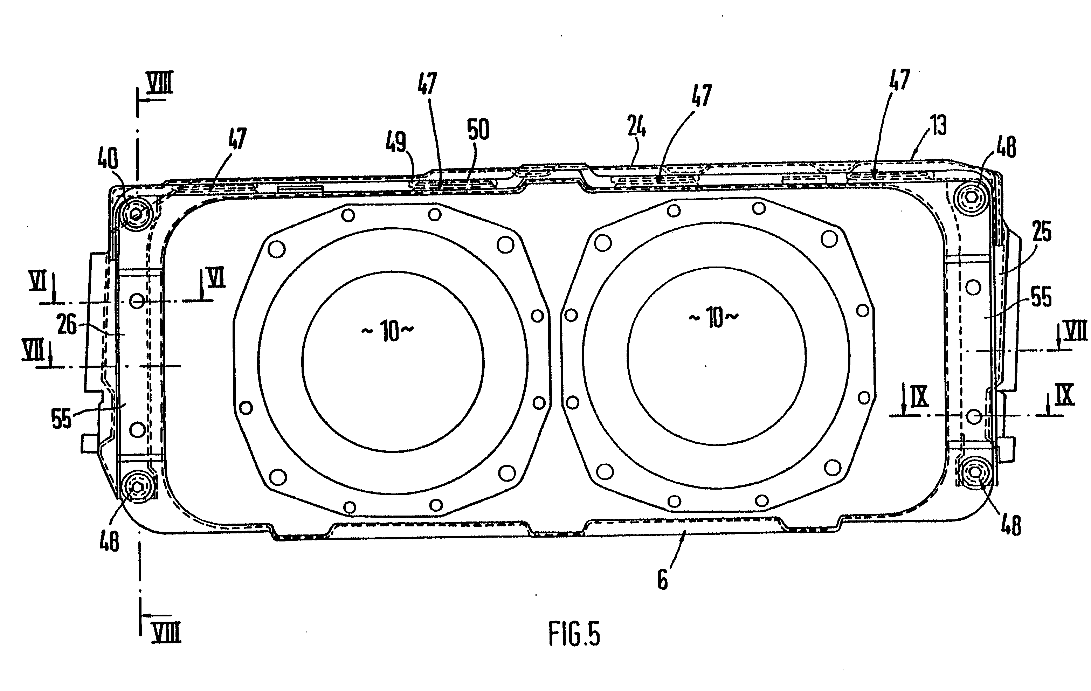

Das Querteil 24 weist - in Fahrzeuglängsrichtung gesehen - eine geringe Längserstreckung auf als die beiden Seitenteile 25, 26, die zum Trägerblech 34 des Deckels 3 hingeführt sind und endseitig querverlaufende Flansche 37 aufweisen (Fig. 4).

Die lösbare Rastverbindung 15 zwischen Deckel 3 und Aufnahmerahmen 13 ist bei 38 vorgesehen, und zwar jeweils außerhalb der Seitenteile 25, 26 des Aufnahmerahmens 13. Jede Rastverbindung 15 besteht aus einer am Aufnahmerahmen 13 angebrachten Federklammer 39 und einem am Trägerblech 34 befestigten zylindrischen Halteteil 40, wobei die Federklammer 39 das Halteteil 40 abschnittsweise umgreift (Fig. 9). Die erforderlich Haltekraft wird empirisch ermittelt. Das zylindrische Halteteil 40 ist etwa vertikal ausgerichtet und wird durch Nieten am Trägerblech 34 in Lage gehalten. Die Federklammern 39 sind an den Seitenteilen 25, 26 des Aufnahmerahmens angebracht und zum Halteteil 40 hin offen ausgebildet. Im Bereich der Federklammer 39 weist der Aufnahmerahmen 13 eine Eindrückung 41 und einen Freischnitt 42 auf (Fig. 4).

Ein der Sollbiegestelle 17 abgekehrter Endbereich 43 des Deckels 3 hintergreift mit einer nach unten gerichteten Abstellung 44 eine am Armaturenbrett 1 befestigte Schalterleiste 45 und wird durch diese in Lage gehalten. In diesem Endbereich 43 ist kein Trägerblech 34 vorgesehen; dieses endet bei 46 und bildet dort eine Knickkante für den Endbereich 43 beim Öffnen des Deckels 3.

Die Baueinheit 6 wird von der dem Insassen abgekehrten Seite des Armaturenbrettes 1 in den Aufnahmerahmen 13 eingeschoben und ist an diesem über eine Steckverbindung 47 und Befestigungsschrauben 48 in Lage gehalten. Vor der Montage der Befestigungsschrauben 48 erfolgt zuerst die Steckverbindung 47, so daß zum Einsetzen der Befestigungsschrauben 48 die Baueinheit 6 selbsttätig in Lage gehalten ist.

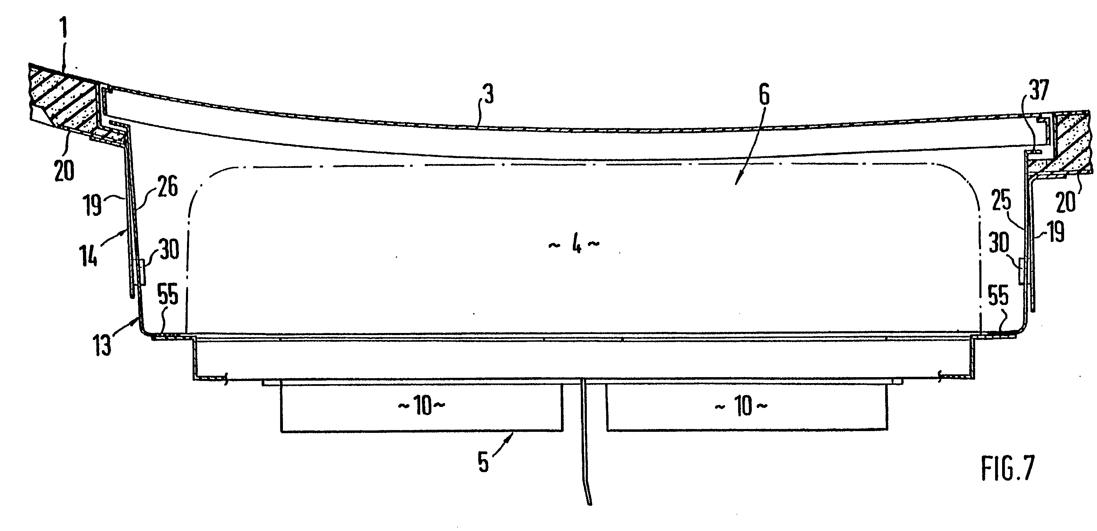

Die Steckverbindung 47 wird durch wenigstens eine am Querteil 24 des Aufnahmerahmens 13 angeordnete Schlitzöffnung 49 gebildet, in die eine abgestellte Zunge 50 der Baueinheit 6 eingeführt wird. Gemäß Fig. 5 sind mehrere Schlitzöffnungen 49 und Zungen am Aufnahmerahmen 13 bzw. an der Baueinheit 6 vorgesehen.

Die Schlitzöffnungen 49 sind an dem in Fahrtrichtung D gesehen vorneliegenden Ende des Querteils 24 angebracht und zwar an einem aufrecht verlaufenden Steg 51 einer etwa U-förmig profilierten Versteifungssicke 52.

Bei 53 und 54 liegt die Baueinheit 6 unmittelbar an einem querverlaufenden Flansch 55 des Aufnahmerahmens 13 an und wird durch in Fahrzeuglängsrichtung ausgerichtete Befestigungselemente 48 in Lage gehalten. Diese sind in einstückig mit dem Aufnahmerahmen 13 angebrachte Gewindemuttern 56 eingedreht.

Die Montage der Aufprallschutzeinrichtung 5 erfolgt wie unten angegeben: Zuerst wird der Deckel 3 mit dem Aufnahmerahmen 13 verschraubt und die Rastverbindung 15 hergestellt. Danach wird der Aufnahmerahmen 13 zusammen mit dem Deckel 3 in das Trägerteil 14 eingeschoben und der Aufnahmerahmen 13 so am Trägerteil 14 befestigt, daß ein stylistisch einwandfreier Fungenverlauf zwischen dem Deckel 3 und dem angrenzenden Armaturenbrett 1 geben ist. Schließlich wird die vormontierte Baueinheit 6 von hinten in den Aufnahmerahmen 13 eingesetzt und nach der Steckverbindung 47 werden die Befestigungsschrauben 48 eingedreht.

## Patentansprüche

1. Aufprallschutzeinrichtung (5) für einen Insassen eines Kraftfahrzeuges, die eine vorgefertigte, in eine Ausnehmung (4) eines Armaturenbretts (1) eingesetzte Baueinheit (6) umfaßt, welche im wesentlichen aus einer Grundplatte (8) und einem Gaskissen (9) besteht, wobei die Ausnehmung (4) durch einen Deckel (3) verschließbar ist, der mittels einer lösbaren Rastverbindung (15) in seiner Schließstellung fixiert ist und daß beim Aufblasen des Gaskissens (9) der Deckel (3) nach oben hin in Richtung Windschutzscheibe (18) verschwenkt wird, dadurch gekennzeichnet, daß die aus einem Generatorgehäuse (7), einer Grundplatte (8), einem Gaskissen (9), wenigstens einem Generator (10) und einer mit einer Reißnaht (11) versehenen Abdeckung (12) gebildete Baueinheit (6) unter Zwischenschaltung eines Aufnahmerahmens (13) einstellbar mit einem Trägerteil des Armaturenbretts (1) verbunden ist, wobei zwischen Aufnahmerahmen (13) und Baueinheit (6) eine Steckverbindung (47) vorgesehen ist und daß die lösbare Rastverbindung (15) aus einem zylindrischen Halteteil (40) und einer mit diesem zusammenwirkenden Federklammer (39) besteht, wobei die am Aufnahmerahmen (13) angebrachte Federklammer (39) bei geschlossenem Deckel (3) das deckelseitig angeordnete Halteteil (40) abschnittsweise umgreift.

2. Aufprallschutzeinrichtung nach Anspruch 1, dadurch gekennzeichnet, daß die Baueinheit (6) einerseits über die Steckverbindung (47) und andererseits über Befestigungsschrauben (48) mit dem Aufnahmerahmen (13) zusammenwirkt.

3. Aufprallschutzeinrichtung nach den Ansprüchen 1 und 2, dadurch gekennzeichnet, daß die Steckverbindung (47) durch zumindest eine am Aufnahmerahmen (13) angeordnete Schlitzöffnung (49) gebildet wird, durch die eine abgestellte Zunge (50) der Baueinheit (6) hindurchgeführt ist.

4. Aufprallschutzeinrichtung nach Anspruch 1, dadurch gekennzeichnet, daß sich der Aufnahmerahmen (13) aus einem oberen Querteil (24) und zwei außenliegenden Seitenteilen (25, 26) zusammensetzt.

5. Aufprallschutzeinrichtung nach Anspruch 3, dadurch gekennzeichnet, daß die Schlitzöffnung (49) im Bereich einer U-förmig profilierten Versteifungssicke (52) des Querteils (24) angeordnet ist.

6. Aufprallschutzeinrichtung nach Anspruch 1, dadurch gekennzeichnet, daß das Querteil (24) des Aufnahmerahmens (13) zumindest über einen Teilbereich seiner Quererstreckung unmittelbar mit einem Trägerblech (34) des Deckels (3) verbunden ist, wobei eine in Fahrtrichtung gesehen hintenliegende Begrenzungskante des Querteils (24) eine Sollbiegestelle (17) für den Deckel (13) bildet.

7. Aufprallschutzeinrichtung nach Anspruch 6, dadurch gekennzeichnet, daß am Trägerblech (34) des Deckels (3) benachbart der Sollbiegestelle (17) eine versteifungslose, biegeweiche Zone ausgebildet ist.

8. Aufprallschutzeinrichtung nach Anspruch 7, dadurch gekennzeichnet, daß an der der Sollbiegestelle (17) abgekehrten Seite des Deckels (3) eine nach unten gerichtete Abstellung (44) vorgesehen ist, die eine am Armaturenbrett (1) befestigte Schalterleiste (45) hintergreift.

## Claims

1. An impact protection device (5) for an occupant of a motor vehicle, which comprises a pre-fabricated structural unit (6) which is inserted into a recess (4) in a dashboard (1) and which essentially comprises a base plate (8) and an air bag (9), the recess (4) being closable by a cover (3) which is fixed in its closed position by means of a releasable catch connexion (15), and during the inflation of the air bag (9) the cover (3) is pivoted upwards in the direction of the windscreen (18), characterized in that the structural unit (6) comprising a generator housing (7), a base plate (8), an air bag (9), at least one generator (10) and a covering (12) provided with a tear seam (11) is adjustably connected to a support member of the dashboard (1) with interposition of a receiving frame (13), a plug connexion (47) being provided between the receiving frame (13) and the structural unit (6), the releasable catch connexion (15) comprising a cylindrical holding member (40) and a spring clip (39) cooperating therewith, and the spring clip (39) mounted on the receiving frame (13) engaging in part around the holding member (40) arranged on the cover (3) when the latter is closed.

2. An impact protection device according to Claim 1, characterized in that the structural unit (6) cooperates with the receiving frame (13) on the one hand by way of the plug connexion (47) and on the other hand by way of fastening screws (48).

3. An impact protection device according to Claims 1 and 2, characterized in that the plug connexion (47) is formed by at least one slot opening (49) which is provided on the receiving frame (13) and through which an angled tongue (50) of the structural unit (6) passes.

4. An impact protection device according to Claim 1, characterized in that the receiving frame (13) comprises an upper transverse member (24) and two lateral members (25, 26) lying on the outside.

5. An impact protection device according to Claim 3, characterized in that the slot opening (49) is provided in the region of a reinforcing corrugation (52) of the transverse member (24) which is U-shaped in section.

6. An impact protection device according to Claim 1, characterized in that the transverse member (24) of the support frame (13) is directly connected to a support plate (34) of the cover (3) at least over a partial area of its transverse extension, a boundary edge of the transverse member (24) towards the rear as viewed in the direction of travel forming a predetermined bending point (17) for the cover (13) [sic].

7. An impact protection device according to Claim 6, characterized in that a yielding zone without reinforcement is formed on the support plate (34) of the cover (3) adjacent the predetermined bending point (17).

8. An impact protection device according to Claim 7, characterized in that a downwardly orientated angled portion (44), which engages behind a switch panel (45) secured to the dashboard (1), is provided on the side of the cover (3) remote from the predetermined bending point (17).

**Revendications**

1. Dispositif de protection anti-collision (5) pour un passager d'un véhicule automobile, qui comprend un ensemble (6) fabriqué à l'avance et disposé dans un évidement (4) d'un tableau de bord (1), qui consiste essentiellement en une plaque de base (8) et en un coussin à gaz (9), l'évidement (4) pouvant être fermé par un couvercle (3) qui est fixé par une liaison à enclenchement amovible (15) dans sa position de fermeture de manière que lorsque le coussing à gaz (9) est gonflé, le couvercle (13) soit pivoté vers le haut en direction du pare-brise (18), caractérisé en ce que l'ensemble (6) formé par un logement de générateur (7), une plaque de base (8), un coussin à gaz (9), au moins un générateur (10) et un couvercle (12) muni d'une ligne d'arrachement (11) est relié de façon réglable à un élément de support du tableau de bord (1) avec interposition d'un cadre de réception (13), une liaison par emboîtement (47) étant prévue entre le cadre de réception (13) et l'ensemble (6), et en ce que la liaison à enclenchement amovible (15) est constituée par une partie de retenue cylindrique 40 et par une pince élastique (39) coopérant avec cette dernière, la pince élastique (39) montée dans le cadre de réception (13) entourant en partie la partie de retenue (40) montée du côté du couvercle quand ce couvercle (3) est fermé.

2. Dispositif de protection anti-collision selon la revendication 1, caractérisé en ce que l'ensemble (6) coopère d'une part avec la liaison par emboîtement (47) et d'autre part avec le cadre de réception (13) grâce à des vis de fixation.

3. Dispositif de protection anti-collision selon les revendications 1 et 2, caractérisé en ce que la liaison par emboîtement (47) est formée par au moins une ouverture en forme de fente (49) constituée dans le cadre de réception (13), qui est traversé par une languette d'arrêt en saillie (50) de l'ensemble (6).

4. Dispositif de protection anti-collision selon la revendication 1, caractérisé en ce que le cadre de réception (13) est constitué par l'assemblage d'une partie transversale supérieure (24) et de deux parties latérales externes (25, 26).

5. Dispositif de protection anti-collision selon la revendication 3, caractérisé en ce que l'ouverture en forme de fente (49) est prévue dans la région d'une nervure de renforcement (52) à profil en U de la partie transversale (24).

6. Dispositif de protection anti-collision selon la revendication 1, caractérisé en ce que la partie transversale (24) du cadre de réception (13) est reliée au moins par une région partielle de son étendue transversale directement à une tôle de support (34) du couvercle (3), un bord limite arrière vu direction du sens de la marche de la partie transversale (24) formant une position de pliage obligé pour le couvercle (13).

7. Dispositif de protection anti-collision selon la revendication 7, caractérisé en ce qu'une zone flexible et sans élément de raidissement est constituée dans la tôle de support (34) du couvercle (3) au voisinage de la position de pliage obligé 17.

8. Dispositif de protection anti-collision selon la revendication 7, caractérisé en ce qu'il est prévu sur le côté du couvercle (3) qui est à l'opposé de la position de pliage obligé 17 une position d'arrêt (44) dirigée vers le bas qui recouvre par l'arrière la baguette de commutation (45) fixée au tableau de bord (1).

FIG.1

FIG.4

FIG.2

FIG.3

FIG.5

EP 0 235 383 B1

FIG.7

EP 0 235 383 B1

FIG.6

FIG.8

FIG.9

FIG.10